# EUROPEAN PATENT APPLICATION

(11) **EP 4 712 153 A1**
(43) Date of publication of application: **18.03.2026**
(21) Application number: 25201367.7
(22) Date of filing: 10.09.2025
(51) Int. Cl.: H01M 4/04, H01M 4/66, H01M 4/74

(54) **ELECTRODE SUBSTRATE FOR RECHARGEABLE LITHIUM BATTERIES, ELECTRODE AND RECHARGEABLE LITHIUM BATTERIES CONTAINING THE SAME, AND METHOD FOR MANUFACTURING THE ELECTRODE**

(30) Priority: 13.09.2024 KR 20240126126
(71) Applicant: SAMSUNG SDI CO., LTD., Yongin-si, Gyeonggi-do 17084 (KR)
(72) Inventor: KIM, Soyun, Yongin-si 17084 (KR); CHO, Byunghuy, Yongin-si 17084 (KR); BYEON, Junho, Yongin-si 17084 (KR); LIM, Hyojin, Yongin-si 17084 (KR)
(74) Representative: Maiwald GmbH

(57) **Abstract**

Examples of the disclosure include an electrode substrate for a rechargeable lithium battery, an electrode and a rechargeable lithium battery including the electrode substrate, and a method for manufacturing the electrode. The electrode substrate for a rechargeable lithium battery includes a first metal layer including a first metal; an insulating layer on the first metal layer and including a polymer; and a second metal layer on the insulating layer and including a second metal. The insulating layer has an interconnected pore structure and is divided into a first region and a second region, and the first region further includes a third metal that substantially fills the interconnected pore structure within the insulating layer.

## Description

### BACKGROUND

### 1. Field

Electrode substrates for rechargeable lithium batteries, electrodes including and rechargeable lithium batteries including the electrode substrates, and method for manufacturing the electrodes are disclosed.

### 2. Description of the Related Art

Rechargeable lithium batteries, which are typically convenient to carry as well as implement high energy density, are widely used as power sources for, e.g., mobile information terminals such as smart phones, laptops, and the like. Rechargeable lithium batteries with high safety and high capacity as power sources for hybrid vehicles and electric vehicles or for storing electric power may be advantageous.

As consumer demands for high capacity, rapid charging, safety, and lightweight rechargeable lithium batteries continue, improving composite substrate technology may be advantageous. The composite substrate refers to a current collector having a multilayer structure that includes metal layers on both surfaces of a polymer layer. Such a composite substrate, in which a portion of a metal thin film (e.g., Al for a positive electrode, Cu for a negative electrode), a general current collector, is replaced with an insulating layer such as a polymer film, may consume a lower metal amount and may reduce or prevent the occurrence of short circuits caused by elongation differences of internal materials during the penetration.

However, such a composite substrate may have a disadvantage in that when a strip terminal is attached thereto, due to insulating characteristics of the insulating layer, one surface of the metal layer may be electrically connected, but the other surface of the metal layer may not be electrically connected.

In order to address this disadvantage, there is a method of first attaching a general substrate tab to one surface of each metal layer, and then connecting the strip terminal to the general substrate tab, but according to this method, the length of the general substrate tab may have increased, making it challenging to assemble, and causing short circuits.

### SUMMARY

Some example embodiments include an electrode substrate for a rechargeable lithium battery configured to electrically connect two metal layers even when a strip terminal is directly welded without a separate substrate tab for electrically connecting the metal layers, while also reducing or preventing a short circuit from occurring during penetration.

Some example embodiments include an electrode and manufacturing method thereof including the electrode substrate of the example embodiments.

Some example embodiments include a rechargeable lithium battery including the electrode of the example embodiments.

Some example embodiments include an electrode substrate for a rechargeable lithium battery including a first metal layer including a first metal; an insulating layer on the first metal layer and including a polymer; and a second metal layer on the insulating layer and including a second metal. The insulating layer has an interconnected pore structure and is divided into a first region and a second region, and the first region further includes a third metal that substantially fills the interconnected pore structure within the insulating layer.

Some example embodiments include an electrode for a rechargeable lithium battery, including the aforementioned electrode substrate; a strip terminal on a first region of the electrode substrate; and an active material layer on a second region of the electrode substrate.

Some example embodiments include a method for manufacturing an electrode for a rechargeable lithium battery, the method including forming an active material layer on one surface of an electrode substrate, attaching a strip terminal to either one surface of a first metal layer or a second metal layer of an electrode substrate on which an active material layer is not formed, and melting a first metal or a second metal included in a first metal layer or a second metal layer in an area to which a strip terminal is attached to substantially fill interconnected pores in an insulating layer.

Some example embodiments include a rechargeable lithium battery including a positive electrode, a negative electrode, and an electrolyte, wherein at least one of the positive electrode and the negative electrode is the aforementioned electrode according to the example embodiments.

The electrode substrate according to some example embodiments can electrically connect two metal layers even when the strip terminal is directly welded without a separate substrate tab that electrically connects the two metal layers, while also reducing or preventing a short circuit from occurring during penetration.

### BRIEF DESCRIPTION OF THE DRAWINGS

FIG. 1 is a schematic view illustrating the mechanism of a short circuit in a conventional composite material.
FIG. 2 is a schematic view illustrating a strip terminal connected to a conventional composite substrate.
FIG. 3 is a cross-sectional schematic view of an electrode substrate according to some example embodiments.
FIG. 4 is a schematic view illustrating an electrode substrate or electrode manufactured according to a manufacturing method according to some example embodiments.
FIGS. 5 to 8 are cross-sectional views schematically illustrating rechargeable lithium batteries according to some example embodiments.
FIG. 9 is a flow chart illustrating a method of manufacturing an electrode for the rechargeable lithium battery, according to an example embodiment.

### DETAILED DESCRIPTION

Hereinafter, example embodiments of the present disclosure are described in detail. However, these embodiments are examples, the present disclosure is not limited thereto, and the present disclosure is defined by the scope of claims.

As used herein, when specific definition is not otherwise provided, It is understood that when an element such as a layer, film, region, or substrate is referred to as being "on" another element, it may be "directly on" the other element, or intervening elements may also be present.

As used herein, when a specific definition is not otherwise provided, the singular may also include the plural. In addition, unless otherwise specified, "A or B" may indicate "including A, including B, or including A and B."

As used herein, "combination thereof" may indicate a mixture, a stack, a composite, a copolymer, an alloy, a blend, or a reaction product of constituents.

As used herein, when a specific definition is not otherwise provided, "substituted" refers to replacement of at least one hydrogen of a compound by a halogen atom (F, Cl, Br, or I), a hydroxy group, a C1 to C20 alkoxy group, a nitro group, a cyano group, an amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C30 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, or a combination thereof.

As used herein, when a specific definition is not otherwise provided, "heterocycloalkyl group," "heterocycloalkenyl group," "heterocycloalkynyl group," and "heterocycloalkylene group" refer to presence of at least one N, O, S, or P in a cyclic compound of cycloalkyl, cycloalkenyl, cycloalkynyl, and cycloalkylene.

In the chemical formula of the present specification, unless a specific definition is otherwise provided, hydrogen is boned at the position when a chemical bond is not drawn where supposed to be given.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Electrode Substrate

Some example embodiments include an electrode substrate for a rechargeable lithium battery which includes a first metal layer including a first metal; an insulating layer on the first metal layer and including a polymer; and a second metal layer on the insulating layer and including a second metal. The insulating layer has an interconnected pore structure and is divided into a first region and a second region, and the first region further includes a third metal that substantially fills the interconnected pore structure within the insulating layer.

The first metal layer and the second metal layer are configured to transmit current to or from the active material during charging and discharging, and constitute a generally known current collector.

A conventional current collector commonly includes a metal thin film made up of or including these metal layers alone. However, the conventional current collector, when deformed by physical and/or chemical factors, may face electrical short circuits, thermal runaway, and/or explosion of the rechargeable lithium battery.

Accordingly, a composite substrate having a structure of metal layer-insulating layer-metal layer may be obtained by replacing a portion of the conventional current collector, which is the metal thin film, with an insulating layer such as a polymer film.

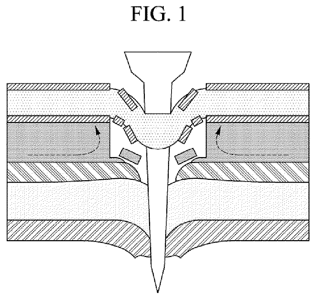

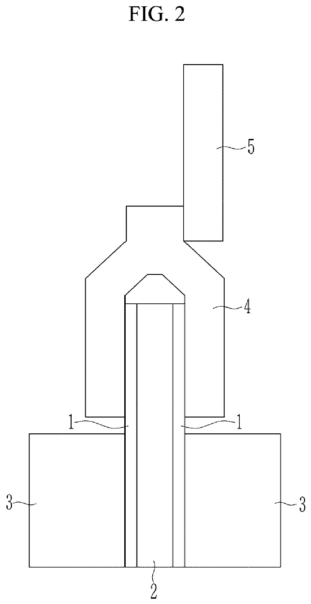

FIG. 1 is a schematic view illustrating the mechanism of a short circuit in a conventional composite material. FIG. 2 is a schematic view illustrating a strip terminal connected to a conventional composite substrate.

Referring to FIG. 1, the composite substrate may reduce or prevent short circuits due to a stretching difference between the metal layer and the insulating layer during the penetration. However, as shown in FIG. 2, because the insulating layer 2 of the known composite substrate has porosity of about 0 volume%, that is, a structure of being substantially fully filled with an insulator such as a polymer, when a strip terminal 5 is connected thereto, only a metal layer 1 connected to the strip terminal 5 is electrically connected, but the other metal layer 1 is not electrically connected.

**In** order to address this issue, a method of attaching a substrate tab 4 to each metal layer 1 and connecting a strip terminal 5 to the general substrate tab 4 has been proposed, which presents another issue that the general substrate tab increases in length, making it difficult to assemble and causing short circuits.

The electrode substrate according to some example embodiments may replace the conventional insulating layer having porosity of about 0 volume% with an insulating layer having a porous structure with a plurality of pores to reduce or suppress the short circuits during the penetration, and electrically connect two metal layers even when the strip terminal is directly welded without the general substrate tab.

Hereinafter, the components of the electrode substrate are described in detail.

### Insulating Layer

The insulating layer according to some example embodiments has a porous structure having a plurality of pores, for example a structure of interconnected pores.

In general, an interconnected pore structure has a higher surface area than a dense body, wherein such pore structures are classified into open pore structures and closed pore structures. The interconnected pore structure indicates a structure where pores are connected with one another without closed pores.

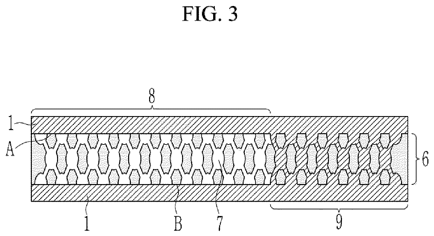

FIG. 3 is a schematic view illustrating the electrode substrate, according to some example embodiments. As shown in FIG. 3, an insulating layer 6 has an open pore structure where pores 7 are interconnected with one another, and the pores are substantially evenly distributed from one surface (A) of the insulating layer to the other surface (B).

Because the insulating layer 6 has such an interconnected pore structure, even when a strip terminal (not shown) is connected to either one of a first metal layer 1 and a second metal layer 1, both the first metal layer and the second metal layer may be electrically connected. As described below, a region 9, to which the strip terminal (not shown) is attached, may be a first region 9 to be described below, wherein a metal of the first metal layer 1 or the second metal layer 1 may be melted by the strip terminal (not shown) and may substantially fill the interconnected pores in the insulating layer. In addition, a region, to which the strip terminal (not shown) is not attached, may be a second region 8 to be described below.

The pores in the insulating layer may have a size in a range of from about 50 nm to about 200 nm, about 60 nm to about 180 nm, about 70 nm to about 160 nm, about 80 nm to about 140 nm, or about 90 nm to about 120 nm. When the pores in the insulating layer have a size within the above range, short circuits may not only be effectively reduced or suppressed during the penetration, but also when the strip terminal is connected to either one of the first metal layer and the second metal layer without a separate substrate tab, both the first metal layer and the second metal layer may be electrically connected thereto. The size of the pores may be measured according to a Brunauer-Emmett-Teller (BET) analysis method.

The pores in the insulating layer may have any shape, as long as the shape has a connected structure, without any particular limit. For example, the pores may be spherical, cylindrical, cracked, channeled, reticulated, lamellar, and the like. In some example embodiments, the pores in the insulating layer may be substantially spherical or reticulated, and the spherical or reticulated pores may have a structure of being in contact and connected to one another.

The insulating layer includes a polymer. The polymer may be or include a thermoplastic resin or a thermosetting resin having a high elongation compared to the first metal layer and the second metal layer, but a heat distortion temperature that is lower than the ignition temperature of the electrolyte.

The thermoplastic resin may include at least one of polypropylene (PP), polyethylene (PE), polyethylene terephthalate (PET), polyvinyl chloride (PVC), polystyrene (PS), acrylonitrile butadiene styrene (ABS), polymethyl methacrylate (PMMA), polyvinyl alcohol (PVA), polyvinylidene-chloride (PVDC), polyamide (PA), polyoxymethylene (POM), polycarbonate (PC), polyphenylene ether (PPE), polybutylene terephthalate (PBT), polysulfone (PSU), polyethersulfone (PES), polyphenylene sulfide (PPS), polyethyleneimine (PEI), or a combination thereof, or a combination of monomers constituting the above compounds.

The thermosetting resin may include at least one of polyurethane (PU), epoxy, phenolic, polyimide, unsaturated polyester, vinyl polyester, or a combination thereof or a combination of monomers constituting these.

The insulating layer may be made mostly of, or include, polymer. For example, based on 100 wt% of the insulating layer, a content of the polymer may be greater than or equal to about 90 wt%, greater than or equal to about 95 wt%, greater than or equal to about 97 wt%, greater than or equal to about 99 wt%, greater than or equal to about 99.9 wt%, or 100 wt%.

The thickness of the insulating layer may be appropriately adjusted depending on the purpose. The thickness of the insulating layer may be in a range of from about 4 µm to about 15 µm, for example about 4 µm to about 12 µm, about 4 µm to about 10 µm, or about 4 µm to about 8 µm. The thickness of the insulating layer may be appropriately adjusted to reduce or prevent short circuits during penetration and to a degree that allows electrical connection to the strip terminal. The thickness of the insulating layer may be measured by taking a photograph of a cross-section of the insulating layer using, e.g., a scanning electron microscope (SEM).

The insulating layer is divided into a first region and a second region. The first region further includes a third metal that substantially fills the interconnected pore structure within the insulating layer, and the second region exists in a state where the pores within the interconnected pore structure within the insulating layer are empty.

The third metal may be the same as or different from the first metal or second metal described below. In some example embodiments, the third metal may be the same as the first metal or the second metal described below. In this case, the third metal may be or include a first metal or a second metal present in the first metal layer or the second metal layer that is melted, and substantially fills the interconnected pore structure within the insulating layer during the welding process by connecting the strip terminal to one surface of the first metal layer or the second metal layer.

The first region may be a region where a strip terminal is attached to either one surface of the first metal layer or the second metal layer.

The second region within the insulating layer may be in an empty state, without another material (e.g., without a metal such as a third metal) being substantially filled within the pores of the interconnected pore structure.

The first region within the insulating layer may have almost or substantially no pores. For example, the first region may have a porosity that is less than about 10 volume%, based on 100 volume% of the porosity of the insulating layer, greater than or equal to about 9 volume%, greater than or equal to about 8 volume%, greater than or equal to about 7 volume%, greater than or equal to about 6 volume%, greater than or equal to about 5 volume%, greater than or equal to about 4 volume%, greater than or equal to about 3 volume%, greater than or equal to about 2 volume%, greater than or equal to about 1 volume%, greater than or equal to about 0.5 volume%, greater than or equal to about 0.1 volume%, or greater than or equal to about 0 volume%. The pores in the first region are charged with the third metal and are thus almost not present, or not present at all. In the insulating layer, when the porosity of the first region is within the above ranges based on 100 volume% of the porosity of the insulating layer, even when a strip terminal is directly welded thereto without a general substrate tab, two metal layers may be electrically connected.

The second region in the insulating layer may be where most of the pores in the insulating layer may exist. For example, the second region may have a porosity that is greater than about 90 volume% based on 100 volume% of the porosity of the insulating layer, greater than or equal to about 91 volume%, greater than or equal to about 92 volume%, greater than or equal to about 93 volume%, greater than or equal to about 94 volume%, greater than or equal to about 95 volume%, greater than or equal to about 96 volume%, greater than or equal to about 97 volume%, greater than or equal to about 98 volume%, greater than or equal to about 99 volume%, greater than or equal to about 99.5 volume%, greater than or equal to about 99.9 volume%, or 100 volume%. When the second region in the insulating layer has a porosity that is within the above ranges based on 100 volume% of the porosity of the insulating layer, it is possible to achieve safety battery.

A ratio (B/A) of the porosity (B) of the second region in the insulating layer to the porosity (A) of the insulating layer may be in a range of from about 0.9 to about 1. For example, the ratio is greater than or equal to about 0.9 and less than or equal to about 1, and the ratio according to some example embodiments may be equal to about 1.

The first region may correspond to an uncoated region where an active material layer to be described below is not coated on an electrode substrate to be described below, and the second region may be a region where the active material layer to be described below is coated.

The insulating layer may be formed in any method as long as the method forms an interconnected pore structure without any particular limit. For example, the insulating layer may be formed by a method of adding a molten polymer to a mold, and solidifying and etching the molten polymer, or preparing a spinning solution containing the polymer and electrospinning the polymer to form a 3D structure made of or including nano wires.

### Metal Layer (first metal layer and second metal layer)

The first metal layer and the second metal layer are commonly electrically conductive layers and electrically conductive in both a plane direction and a thickness direction.

For example, the first metal and the second metal may independently include at least one of aluminum (Al), nickel (Ni), copper (Cu), iron (Fe), or a combination thereof.

For example, for example, when the electrode substrate of some example embodiments is part of a positive electrode, the first metal and the second metal may independently include aluminum (Al), and when the electrode substrate of some example embodiments is part of a negative electrode, the first metal and the second metal may independently include copper (Cu).

The first metal layer and the second metal layer may have a thickness ratio in a range of from about 3:7 to about 7:3 or about 4:6 to about 6:4. For example, the first metal layer and the second metal layer may have substantially the same thickness.

A sum of the thickness of the first metal layer and the second metal layer may be less than or equal to about 40 thickness%, less than or equal to about 30 thickness%, or less than or equal to about 25 thickness% based on 100 thickness% of a total thickness of the electrode substrate. Within the above ranges, the effect of the first metal layer and the second metal layer may be harmonized with the effect of the function layer.

The first metal layer and the second metal layer may be formed through, e.g., deposition, coating, lamination, electroplating, and the like.

### Electrode:

Some example embodiments include an electrode for a rechargeable lithium battery including an electrode substrate, a strip terminal positioned on the first region of the electrode substrate, and an active material layer on the second region of the electrode substrate.

The first region of the electrode substrate refers to a region on the electrode substrate where a portion of the electrode substrate corresponding to the first region of the insulating layer is extended in a thickness direction, and the second region of the electrode substrate refers to a region on the electrode substrate where a portion of the electrode substrate corresponding to the second region of the insulating layer is extended in the thickness direction.

The strip terminal is configured to electrically connect the exterior of a rechargeable lithium battery and the electrode substrate, which is described below.

The method for manufacturing the electrode may not be limited.

According to some example embodiments, a method of manufacturing the electrode includes forming an active material layer on one surface of an electrode substrate, attaching a strip terminal to either one surface of a first metal layer or a second metal layer of an electrode substrate on which an active material layer is not formed, and melting a first metal or a second metal included in a first metal layer or a second metal layer in an area to which a strip terminal is attached to substantially fill interconnected pores in an insulating layer.

Because the third metal impregnated/immersed into the interconnected pore structure of the insulating layer interconnects the first metal layer and the second metal layer, even when a strip terminal is attached to a portion of either metal layer of the first metal layer and the second metal layer, the metal layer to which the strip terminal is attached may be electrically connected to the other metal layer. Herein, the third metal may be substantially the same as metal included in the metal layer to which the strip terminal is attached. For example, when the strip terminal is attached to the first metal layer, the third metal may be the same as the first metal, but when the strip terminal is attached to the second metal layer, the third metal may be the same as the second metal.

In other words, the first region may be a region of one surface of either the first metal layer or the second metal layer where the strip terminal is attached.

The strip terminal may be attached through welding. Herein, the welding may be, e.g., laser welding or ultrasonic welding. A portion where the welding is performed may be an entire region where the strip terminal and the electrode substrate are attached, wherein the region may be the first region.

A welding spot may have various shapes such as a plurality of points, a plurality of straight lines, or a plurality of curved lines, a specific shape, and the like depending on settings of laser welding devices. The welding may generate heat, which may melt a metal of a metal layer where the strip terminal is attached, and thus substantially fill the pores inside the insulating layer.

On the other hand, when the pores of the interconnected pore structure inside the insulating layer of the second region where the strip terminal is not attached are impregnated/immersed with the metal of the metal layer like the first region, the insulating layer may not properly work, causing short circuits during the penetration.

**In** other words, the interconnected pore structure inside the insulating layer of the first region where the strip terminal is attached is impregnated/immersed with a metal of a metal layer where the strip terminal is attached, but in the second region where the strip terminal is not attached, the pores of the interconnected pore structure inside the insulating layer are not filled with the metal and are substantially empty.

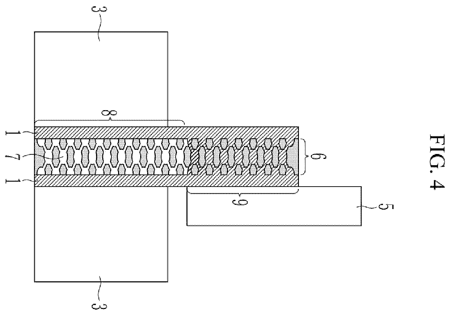

FIG. 4 is a schematic view illustrating an electrode substrate or electrode manufactured according to a manufacturing method according to some example embodiments. In the first region 9 where the strip terminal 5 is attached, the metal of the first metal layer 1 or the second metal layer 1 is melted and substantially fills the interconnected pores of the insulating layer, but in the second region 8 where the strip terminal 5 is not attached, the pores in the insulating layer are open. In the second region, an active material layer 3 may be disposed, and such a structure may not only electrically connect the first and second metal layers, even when the strip terminal 5 is attached to one surface of the first metal layer 1 or the second metal layer 1 without attaching a general substrate tab, but also make the insulating layer 6 reduce or prevent electric short circuits, thermal runaway, and/or explosion of rechargeable lithium batteries, when deformed by physical and/or chemical factors.

Hereinafter, details of the electrode substrate are as described in the electrode substrate section discussed above.

### Active Material Layer (positive electrode active material layer or negative electrode active material layer)

The active material layer may include a positive electrode active material or a negative electrode active material. When the active material layer includes a positive electrode active material, the electrode substrate may be a positive electrode, and when the active material layer includes a negative electrode active material, the electrode substrate may be a negative electrode.

The active material layer may be or include a positive electrode active material layer including a positive electrode active material.

The positive electrode active material may include a compound (lithiated intercalation compound) capable of intercalating and deintercalating lithium. For example, at least one composite oxide of lithium and a metal such as or including at least one of cobalt, manganese, nickel, and combinations thereof may be used.

The composite oxide may be or include a lithium transition metal composite oxide, and examples may include at least one of a lithium nickel-based oxide, a lithium cobalt-based oxide, a lithium manganese-based oxide, a lithium iron phosphate-based compound, a cobalt-free lithium nickel-manganese-based oxide, or a combination thereof.

As an example, a compound represented by any of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al or a combination thereof.

The positive electrode active material may be or include, for example, at least one of a lithium nickel-based oxide represented by Chemical Formula 11 below, a lithium cobalt-based oxide represented by Chemical Formula 12 below, a lithium iron phosphate-based compound represented by Chemical Formula 13 below, a cobalt-free lithium nickel-manganese-based oxide represented by Chemical Formula 14 below, or a combination thereof.

Chemical Formula 11: Liₐ₁Niₓ₁M¹_{y1}M²_{z1}O_{2-b1}X_{b1}

In Chemical Formula 11, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² each independently is or includes one or more of Al, B, Ba, Ca, Ce, Co, Cr, Cu, Fe, Mg, Mn, Mo, Nb, Si, Sn, Sr, Ti, V, W, Y, Zn, and Zr, and X is or includes one or more of F, P, and S.

In Chemical Formula 11, 0.6≤x1≤1, 0≤y1≤0.4, and 0≤z1≤0.4, or 0.8≤x1≤1, 0≤y1≤0.2, and 0≤z1≤0.2.

Chemical Formula 12: Liₐ₂Coₓ₂M³_{y2}O_{2-b2}X_{b2}

In Chemical Formula 12, 0.9≤a2≤1.8, 0.7≤x2≤1, 0≤y2≤0.3, 0.9≤x2+y2≤1.1, and 0≤b2≤0.1, M³ is or includes one or more of Al, B, Ba, Ca, Ce, Cr, Cu, Fe, Mg, Mn, Mo, Ni, Se, Si, Sn, Sr, Ti, V, W, Y, Zn, and Zr, and X is or includes one or more of F, P, and S.

Chemical Formula 13: Liₐ₃Feₓ₃M⁴_{y3}PO_{4-b3}X_{b3}

In Chemical Formula 13, 0.9≤a3≤1.8, 0.6≤x3≤1, 0≤y3≤0.4, and 0≤b3≤0.1, M⁴ is or includes one or more of Al, B, Ba, Ca, Ce, Co, Cr, Cu, Mg, Mn, Mo, Ni, Se, Si, Sn, Sr, Ti, V, W, Y, Zn, and Zr, and X is or includes one or more of F, P, and S.

Chemical Formula 14: Liₐ₄Niₓ₄Mn_{y4}M⁵_{z4}O_{2-b4}X_{b4}

In Chemical Formula 14, 0.9≤a4≤1.8, 0.8≤x4<1, 0<y4≤0.2, 0≤z4≤0.2, 0.9≤x4+y4+z4≤1.1, and 0≤b4≤0.1, M⁵ is or includes one or more of from Al, B, Ba, Ca, Ce, Cr, Cu, Fe, Mg, Mo, Nb, Si, Sn, Sr, Ti, V, W, Y, Zn, and Zr, and X is or includes one or more of F, P, and S.

As an example, the positive electrode active material may be or include a high nickel-based positive electrode active material having a nickel content that is greater than or equal to about 80 mol%, greater than or equal to about 85 mol%, greater than or equal to about 90 mol%, greater than or equal to about 91 mol%, or greater than or equal to about 94 mol%, and less than or equal to about 99 mol% based on 100 mol% of metals excluding lithium in the lithium transition metal composite oxide. The high nickel-based positive electrode active materials may achieve high capacity and may be applicable to high-capacity, high-density rechargeable lithium batteries.

The positive electrode active material layer may further include a binder, a conductive material, or a combination thereof, together with the positive electrode active material.

The binder improves binding properties of positive electrode active material particles with one another and with a current collector. Examples of binders may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

The conductive material is included to provide electrode conductivity, and any electrically conductive material may be included as a conductive material unless the conductive material causes a chemical change. Examples of the conductive material may include a carbon-based material such as at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

A content of the positive electrode active material may be in a range of from about 90 wt% to about 99 wt% based on 100 wt% of the positive electrode active material layer, and the content of each of the binder and the conductive material may be in a range of from about 0.5 wt% to about 5 wt% based on 100 wt% of the positive electrode active material layer.

The active material layer may be or include a negative electrode active material layer including a negative electrode active material.

The negative electrode active material may include at least one of a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include at least one of a Si-based negative electrode active material or a Sn-based negative electrode active material. The Si-based negative electrode active material may include at least one of silicon, a silicon-carbon composite, SiOₓ (0 < x ≤ 2), a Si-Q alloy (wherein Q is or includes at least one of an alkali metal, an alkalineearth metal, a Group 13 element, a Group 14 element (excluding Si), a Group 15 element, a Group 16 element, a transition metal, a rare earth element, and a combination thereof), or a combination thereof. The Sn-based negative electrode active material may be or include at least one of Sn, SnO₂, a Sn-based alloy, or a combination thereof.

The silicon-carbon composite may be or include a composite of silicon and amorphous carbon. According to some example embodiments, the silicon-carbon composite may be in the form of silicon particles and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core.

The Si-based negative electrode active material or Sn-based negative electrode active material may be mixed with the carbon-based negative electrode active material.

The above negative electrode active material layer may further include at least one of a binder, a conductive material, or a combination thereof, together with the negative electrode active material.

The binder is configured to adhere the negative electrode active material particles to each other, and to adhere the negative electrode active material to the current collector. The binder may be or include at least one of a non-aqueous binder, an aqueous binder, a dry binder, or a combination thereof.

The non-aqueous binder may include at least one of polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least one of a styrene-butadiene rubber, a (meth)acrylated styrene-butadiene rubber, a (meth)acrylonitrilebutadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is included as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed. The alkali metal may be or include at least one of Na, K, or Li.

The dry binder may be or include a polymer material capable of becoming fiber, and may be or include, for example, at least one of polytetrafluoroethylene, polyvinylidene fluoride, a polyvinylidene fluoride-hexafluoropropylene copolymer, polyethylene oxide, or a combination thereof.

The conductive material is included to provide electrode conductivity, and any electrically conductive material may be included as a conductive material unless the electrically conductive material causes a chemical change. Examples of the conductive material include a carbon-based material such as or including at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum silver, and the like; a conductive polymer such as a polyphenylene derivative; or a mixture thereof.

For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Rechargeable Lithium Battery:

Some example embodiments include a rechargeable lithium battery including a positive electrode, a negative electrode, and an electrolyte, wherein at least one of the positive electrode and the negative electrode is or includes the electrode of some example embodiments.

Because the contents of the positive and negative electrodes are as described above, the electrolyte, separator, and the like, included in the rechargeable lithium battery are described in detail below.

### Electrolyte

For example, the electrolyte for a rechargeable lithium battery may be an electrolyte solution, which may include a non-aqueous organic solvent and a lithium salt.

The non-aqueous organic solvent is configured as a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like and the aprotic solvent may include at least one of nitriles such as R-CN (wherein R is a C2 to C20 linear, branched, or cyclic hydrocarbon group, a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent can be included alone or in a mixture of two or more types.

When including a carbonate-based solvent, a cyclic carbonate and a chain carbonate may be mixed, and the cyclic carbonate and the chain carbonate may be mixed in a volume ratio in a range of from about 1:1 to about 1:9.

The lithium salt dissolved in the organic solvent is configured to supply lithium ions in a battery, to enable a basic operation of a rechargeable lithium battery, and to improve transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₃)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) wherein x and y are integers of 1 to 20, lithium trifluoromethane sulfonate, lithium tetrafluoroethane sulfonate, lithium difluorobis(oxalato) phosphate (LiDFBOP), and lithium bis(oxalato) borate (LiBOB).

### Separator

Depending on the type of the rechargeable lithium battery, a separator may be present between the positive electrode and the negative electrode. The separator may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one surface or on both surfaces of the porous substrate.

The porous substrate may be or include a polymer film formed of or including at least one of polymer such as or including at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (for example, TEFLON^{®}), or a copolymer or mixture of two or more thereof.

The organic material may include a polyvinylidene fluoride-based polymer or a (meth)acrylic-based polymer.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked together.

### Rechargeable Lithium Battery

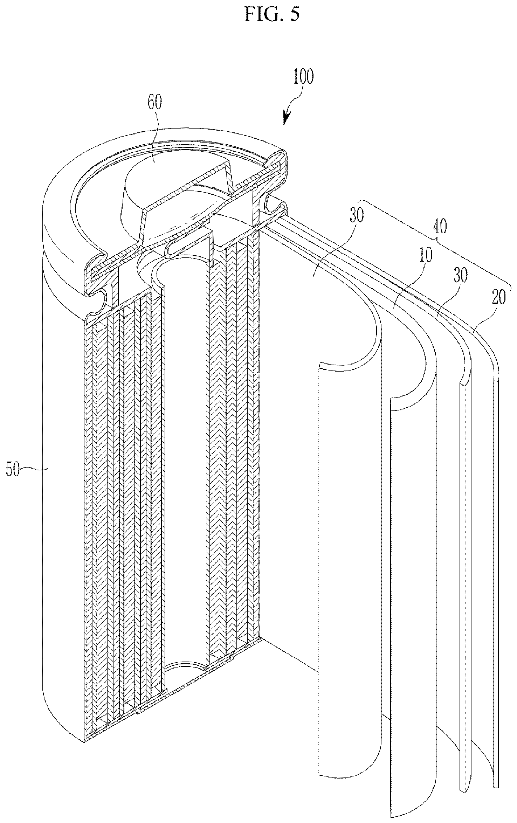

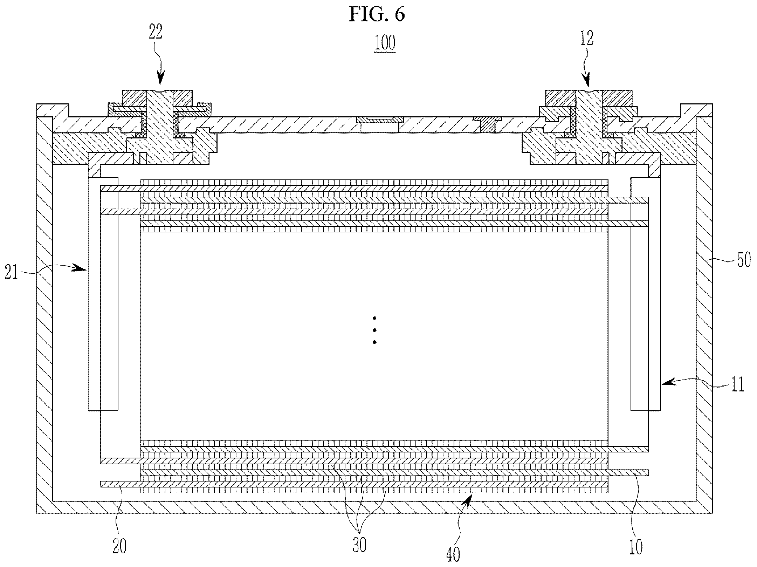

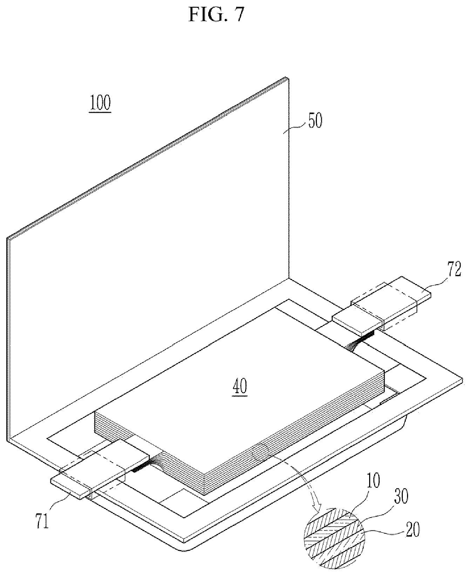

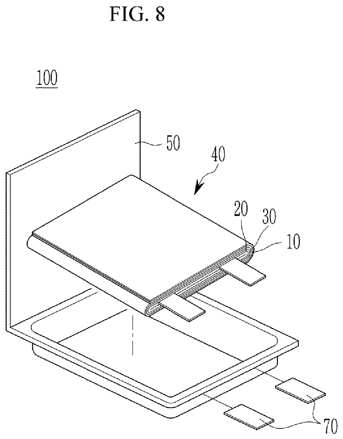

The rechargeable lithium battery may be classified into cylindrical, prismatic, pouch, coin, and the like, depending on the shape thereof. FIGS. 5 to 8 are schematic diagrams illustrating the rechargeable lithium battery according to some example embodiments, where FIG. 5 is a cylindrical battery, FIG. 6 is a prismatic battery, and FIGS. 7 and 8 are a pouch-shaped battery. Referring to FIGS. 5 to 8, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50, as shown in FIG. 5. Additionally, in FIG. 6, the rechargeable lithium battery 100 may include a positive electrode lead tab 11, a positive electrode terminal 12, a negative lead tab 21, and a negative electrode terminal 22. As shown in FIGS. 7 and 8, the rechargeable lithium battery 100 includes an electrode tab 70 illustrated in FIG. 8, or a positive electrode tab 71 and a negative electrode tab 72 illustrated in FIG. 7, the electrode tabs 70/71/72 forming an electrical path for inducing the current formed in the electrode assembly 40 to the outside of the battery 100.

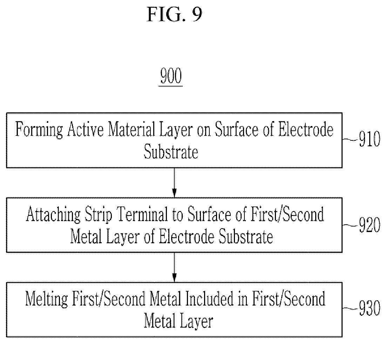

FIG. 9 is a flow chart illustrating a method of manufacturing an electrode for a rechargeable lithium battery, according to an example embodiment. In FIG. 9, the method 900 includes operation 910 which includes forming an active material layer on a surface of an electrode substrate; operation 920 which includes attaching a strip terminal to either surface of a first metal layer or a second metal layer of the electrode substrate on which an active material layer is not formed; and operation 930 which includes melting a first metal or a second metal included in the first metal layer or the second metal layer in an area to which a strip terminal is attached to substantially fill interconnected pores in an insulating layer.

The rechargeable lithium battery according to some example embodiments may be applicable to, e.g., automobiles, mobile phones, and/or various types of electrical devices, but the present disclosure is not limited thereto.

Examples and comparative examples of the present disclosure are described below. However, the following are only examples of the present disclosure, and the present disclosure is not limited to the following examples.

### Example 1

After melting polyethylene terephthalate (PET) as a polymer and then, pouring the PET into a scaffold mold and solidifying the PET, the mold was etched to manufacture an insulating layer with a porous structure having a plurality of pores and particularly, an interconnected pore structure. The insulating layer had a thickness of about 6 µm.

On both surfaces of the insulating layer, copper as a metal was gasified and deposited to manufacture an electrode substrate with a structure of first metal layer-insulating layer-second metal layer. Herein, the first metal layer had a thickness of about 1 µm, and the second metal layer had a thickness of about 1 µm.

On both surfaces of the electrode substrate, an active material layer including graphite as an active material was formed, and a strip terminal was attached onto the first metal layer of the electrode substrate, where the active material layer was not formed.

Subsequently, the strip terminal was welded, so that metal atoms of the first metal layer received heat energy and then, was diffused into the pores of the insulating layer in a region where the strip terminal was attached and then, impregnated/immersed. Herein, the internal pores in the region where the strip terminal was attached were fully charged with the metal atoms, wherein this region was a first region, but another region, where the strip terminal was not attached and the pores were empty, was a second region.

The first region had porosity of 0 volume% based on 100 volume% of the porosity of the insulating layer, and the second region had porosity of 100 volume% based on 100 volume% of the porosity of the insulating layer.

### Comparative Example 1-1

An electrode substrate and an electrode were substantially manufactured in the same manner as in Example 1 with a difference that the strip terminal was not attached and welded onto the electrode substrate in Example 1.

Herein, the insulating layer of the electrode substrate, which had an evenly distributed interconnected pore structure over the entire area, existed only in a portion corresponding to the second region, so that the first metal layer and the second metal layer were not electrically connected.

### Comparative Example 1-2

An electrode substrate and an electrode were substantially manufactured in the same manner as in Example 1 with a difference that rather than melting only a portion of the electrode substrate of Example 1 where a strip terminal was attached onto the electrode substrate, the entire surface of the electrode substrate was applied by heat so that metal of the metal layer was melted into the interconnected pore structure of the insulating layer to have a completely impregnated/immersed structure.

Herein, the insulating layer of the electrode substrate had no pores because the metal was completely impregnated/immersed into the pores of the interconnected pore structure in the insulating layer, so that only a portion corresponding to the first region existed. The electrode of Comparative Example 1-2, in which the first metal layer and the second metal layer were electrically connected across the entire insulating layer, did not achieve battery safety in the penetration evaluation.

### Example 2

An electrode substrate and an electrode were substantially manufactured in the same manner as in Example 1 with a difference that aluminum as a metal layer was gasified and deposited on both surfaces of the insulating layer of Example 1, and an active material layer including LiCoO₂ as an active material was formed.

As in Example 1, in the electrode substrate of Example 2, pores of the insulating layer in a region (i.e., first region) where a strip terminal was attached were fully filled with metal atoms, but pores in another region (i.e., second region) where the strip terminal was not attached were left empty.

The first region had porosity of 0 volume% based on 100 volume% of the porosity of the insulating layer, and the second region had porosity of 100 volume% based on 100 volume% of the porosity of the insulating layer.

### Comparative Example 2-1

An electrode substrate and an electrode were substantially manufactured in the same manner as in Example 2 with a difference that the strip terminal was not attached and welded onto the electrode substrate of Example 2.

Herein, the insulating layer of the electrode substrate, which has an evenly distributed interconnected pore structure over the entire area, existed only in a region corresponding to the second region, so that first metal layer and second metal layer were not electrically connected.

### Comparative Example 2-2

An electrode substrate and an electrode were substantially manufactured in the same manner as in Example 2 with a difference that rather than melting only a portion of the electrode substrate of Example 2 where the strip terminal was attached, the entire surface of the electrode substrate was applied by heat, so that the metal of the metal layer was melted and completely impregnated/immersed into the interconnected pore structure of the insulating layer.

Herein, the insulating layer of electrode substrate had no pores because the metal was completely impregnated/immersed in the pores of the interconnected pore structure in the insulating layer, so that a region corresponding to the first region alone existed. The electrode of Comparative Example 2-1, in which the first metal layer and the second metal layer were electrically connected in the entire surface of the insulating layer, did not achieve battery safety in the penetration evaluation.

While this disclosure has been described in connection with what is presently considered to be practical example embodiments, it is to be understood that the disclosure is not limited to the disclosed example embodiments. Instead, the disclosure is intended to cover various modifications and equivalent arrangements included within the scope of the appended claims.

### Description of Symbols:

| | | | |
|---|---|---|---|
| 1: | metal layer | | |

| | | | |
|---|---|---|---|
| 2: | insulating layer of known composite substrate | | |
| 3: | active material layer | 4: | general substrate tab |
| 5: | strip terminal | 6: | insulating layer |
| 7: | pore | 8: | second region |
| 9: | first region | A: | one surface |
| B: | the other surface | 100: | rechargeable lithium battery |
| 10: | positive electrode | 11: | positive electrode lead tab |
| 12: | positive terminal | 20: | negative electrode |
| 21: | negative electrode lead tab | 22: | negative terminal |
| 30: | separator | 40: | electrode assembly |
| 50: | case | 60: | sealing member |
| 70: | electrode tab | 71: | positive electrode tab |
| 72: | negative electrode tab | | |

## Claims

1. An electrode substrate for a rechargeable lithium battery, the electrode substrate comprising:
a first metal layer including a first metal;
an insulating layer on the first metal layer and including a polymer; and
a second metal layer on the insulating layer and including a second metal;
wherein the insulating layer has an interconnected pore structure and is divided into a first region and a second region, and the first region further includes a third metal that substantially fills the interconnected pore structure within the insulating layer.

2. The electrode substrate as claimed in claim 1, wherein the insulating layer has an open pore structure in which each pore is substantially evenly distributed from one surface of the insulating layer to the other surface thereof.

3. The electrode substrate as claimed in claim 1 or 2, wherein a size of pores in the insulating layer is in a range of from about 50 nm to about 200 nm.

4. The electrode substrate as claimed in any one of claims 1 to 3, wherein the polymer comprises a thermoplastic resin or a thermosetting resin.

5. The electrode substrate as claimed in any one of claims 1 to 4, wherein a content of the polymer is greater than or equal to about 90 wt% based on 100 wt% of the insulating layer.

6. The electrode substrate as claimed in any one of claims 1 to 5, wherein a thickness of the insulating layer is in a range of from about 4 µm to about 15 µm.

7. The electrode substrate as claimed in any one of claims 1 to 6, wherein the third metal is different from the first metal or the second metal; or wherein the third metal is the same as the first metal or the second metal.

8. The electrode substrate as claimed in any one of claims 1 to 7, wherein a porosity of the first region in the insulating layer is less than about 10 volume% based on 100 volume% of a porosity of the insulating layer; and /or wherein a porosity of the second region in the insulating layer is greater than about 90 volume% with respect to 100 volume% of the porosity of the insulating layer.

9. The electrode substrate as claimed in any one of claims 1 to 8, wherein a ratio of a porosity of the second region in the insulating layer to a porosity of the insulating layer is in a range of from about 0.9 to about 1.

10. The electrode substrate as claimed in any one of claims 1 to 9, wherein the first metal and the second metal each independently comprises a metal comprising at least one of aluminum (Al), nickel (Ni), copper (Cu), and iron (Fe).

11. The electrode substrate as claimed in any one of claims 1 to 10, wherein a sum of thicknesses of the first metal layer and the second metal layer is less than or equal to about 40% of a total thickness of the electrode substrate.

12. An electrode for a rechargeable lithium battery, the electrode comprising:
the electrode substrate as claimed in any one of claims 1 to 11;
a strip terminal on the first region of the electrode substrate; and
an active material layer on the second region of the electrode substrate; and, optionally, wherein the active material layer comprises one of a positive electrode active material and a negative electrode active material.

13. A method for manufacturing an electrode for the rechargeable lithium battery as claimed in claim 12, the method comprising:
forming the active material layer on one surface of the electrode substrate;
attaching the strip terminal to either surface of the first metal layer or the second metal layer of the electrode substrate on which the active material layer is not formed, and
melting the first metal or the second metal included in the first metal layer or the second metal layer in an area to which the strip terminal is attached to substantially fill interconnected pores in the insulating layer.

14. A rechargeable lithium battery, comprising:
a positive electrode,
a negative electrode, and
an electrolyte,
wherein at least one of the positive electrode and the negative electrode comprises the electrode as claimed in claim 12.

15. The rechargeable lithium battery as claimed in claim 14, wherein the rechargeable lithium battery further comprises a separator impregnated with the electrolyte between the positive electrode and the negative electrode.
